# EUROPEAN PATENT APPLICATION

(11) **EP 4 803 272 A1**
(43) Date of publication of application: **09.09.2026**
(21) Application number: 25797773.6
(22) Date of filing: 01.04.2025
(51) Int. Cl.: B25J 17/00, B25J 9/04, B25J 9/10, B62D 57/032

(54) **HIP JOINT OF HUMANOID ROBOT**

(30) Priority: 29.04.2024 KR 20240057164; 03.07.2024 KR 20240087599; 07.10.2024 KR 20240135693
(71) Applicant: Samsung Electronics Co., Ltd., Suwon-si, Gyeonggi-do 16677 (KR)
(72) Inventor: KIM, Jinwoong, Suwon-si Gyeonggi-do 16677 (KR); KOO, Donghan, Suwon-si Gyeonggi-do 16677 (KR); KIM, Sungwoo, Suwon-si Gyeonggi-do 16677 (KR)
(74) Representative: Gulde & Partner
(86) International application number: PCT/KR2025/004287
(87) International publication number: WO 2025/230148

(57) **Abstract**

A hip joint of a humanoid robot may include: a first actuator including a first rotating part configured to rotate around a first rotation axis; a second actuator connected to the first rotating part, the second actuator including a second rotating part configured to rotate around a second rotation axis inclined with respect to the first rotation axis; and a third actuator connected to the second rotating part, the third actuator including a third rotating part configured to rotate around a third rotation axis inclined with respect to the second rotation axis.

## Description

### [Technical Field]

The disclosure relates to a humanoid robot, and more particularly, to a hip joint of a humanoid robot.

### [Background Art]

Humanoid robots are currently in the spotlight as a replacement for labor due to population decline.

Therefore, companies, research institutes, and universities around the world are developing humanoid robots.

In order for humanoid robots to secure human-level work performance, they may need to secure a range of motion and motion output of their joints.

Existing humanoid robots may perform human-like walking and running movements.

However, most existing humanoid robots are developed with different dynamics from humans, so they may lack flexibility and maneuverability.

### [Disclosure of Invention]

### [Technical Solution]

According to an aspect of the disclosure, a hip joint of a humanoid robot may include: a first actuator comprising a first rotating part configured to rotate around a first rotation axis; a second actuator connected to the first rotating part, the second actuator comprising a second rotating part configured to rotate around a second rotation axis inclined with respect to the first rotation axis; and a third actuator connected to the second rotating part, the third actuator comprising a third rotating part configured to rotate around a third rotation axis inclined with respect to the second rotation axis.

The first rotation axis, the second rotation axis, and the third rotation axis may meet at an intersection point.

In a geographic coordinate system of a virtual sphere that may be centered on the intersection point: a first point on the first rotation axis may be 145±15 degrees west longitude with respect to a prime meridian line of the virtual sphere, and 30±15 degrees north latitude with respect to an equator of the virtual sphere; a second point on the second rotation axis may be 37±15 degrees west longitude with respect to the prime meridian line, and 31±15 degrees north latitude with respect to the equator; and a third point the third rotation axis may be 90±25 degrees west longitude with respect to the prime meridian line, and 45±15 degrees south latitude with respect to the equator, and wherein the first point, the second point, and the third point are on a surface of the virtual sphere.

The third rotating part may correspond to a thigh of a leg of the humanoid robot, and a center of the thigh may be horizontally spaced a distance from the intersection point.

The distance may be 50 mm to 120 mm.

According to an aspect of the disclosure, a humanoid robot may include: a body; a left leg; a left hip joint on a left side of the body, the left hip joint configured to move the left leg; a right leg; and a right hip joint on a right side of the body, the right hip joint configured to move the right leg, wherein the left hip joint includes: a first actuator includes a first rotating part configured to rotate around a first rotation axis; a second actuator connected to the first rotating part, the second actuator comprising a second rotating part configured to rotate around a second rotation axis inclined with respect to the first rotation axis; and a third actuator connected to the second rotating part, the third actuator comprising a third rotating part configured to rotate around a third rotation axis inclined with respect to the second rotation axis, and wherein the right hip joint includes: a fourth actuator comprising a fourth rotating part configured to rotate around a fourth rotation axis; a fifth actuator connected to the fourth rotating part, the fifth actuator comprising a fifth rotating part configured to rotate around a fifth rotation axis inclined with respect to the fourth rotation axis; and a sixth actuator connected to the fifth rotating part, the sixth actuator comprising a sixth rotating part configured to rotate around a sixth rotation axis inclined with respect to the fifth rotation axis.

The first rotation axis, the second rotation axis, and the third rotation axis of the left hip joint may meet at an intersection point.

In a geographic coordinate system of a virtual sphere that may be centered on the intersection point: a first point of the first rotation axis of the left hip joint may be 145±15 degrees west longitude with respect to a prime meridian line of the virtual sphere, and 30±15 degrees north latitude with respect to an equator of the virtual sphere; a second point of the second rotation axis of the left hip joint may be 37±15 degrees west longitude with respect to the prime meridian line, and 31±15 degrees north latitude with respect to the equator; and a third point of the third rotation axis of the left hip joint may be 90±25 degrees west longitude with respect to the prime meridian line, and 45±15 degrees south latitude with respect to the equator, and wherein the first point, the second point, and the third point are on a surface of the virtual sphere.

The fourth rotation axis, the fifth rotation axis, and the sixth rotation axis of the right hip joint may meet at an intersection point.

In a geographic coordinate system of a virtual sphere that may be centered on the intersection point: a fourth point of the fourth rotation axis of the right hip joint may be 145±15 degrees east longitude with respect to a prime meridian line of the virtual sphere, and 30±15 degrees north latitude with respect to an equator of the virtual sphere; a fifth point of the fifth rotation axis of the right hip joint may be 37±15 degrees east longitude with respect to the prime meridian line, and 31±15 degrees north latitude with respect to the equator; and a sixth point of the sixth rotation axis of the right hip joint may be 90±25 degrees east longitude with respect to the prime meridian line, and 45±15 degrees south latitude with respect to the equator, and wherein the fourth point, the fifth point, and the sixth point may be on a surface of the virtual sphere.

The third rotating part may correspond to a thigh of a leg of the humanoid robot, and a center of the thigh may be horizontally spaced a distance from the intersection point.

The distance may be 50 mm to 120 mm.

The sixth rotating part may correspond to a thigh of the right leg of the humanoid robot, and a center of the thigh may be spaced a distance horizontally from the intersection point.

The distance may be 50 mm to 120 mm.

### [Brief Description of Drawings]

The above and other aspects, features, and advantages of certain embodiments of the disclosure will be more apparent from the following description taken in conjunction with the accompanying drawings, in which:
FIG. 1 is a view illustrating a humanoid robot according to one or more embodiments of the disclosure.
FIG. 2 is a view illustrating a hip joint of a humanoid robot according to one or more embodiments of the disclosure.
FIG. 3 is a rear perspective view illustrating a hip joint of a humanoid robot according to one or more embodiments of the disclosure.
FIG. 4 is a view illustrating a geographic coordinate system of a virtual sphere for explaining inclinations of three rotation axes of a hip joint of a humanoid robot according to one or more embodiments of the disclosure.
FIG. 5 is a view illustrating an inclination of a first rotation axis of a hip joint of a humanoid robot according to one or more embodiments of the disclosure in a geographic coordinate system of a virtual sphere.
FIG. 6 is a view illustrating an inclination of a second rotation axis of a hip joint of a humanoid robot according to one or more embodiments of the disclosure in a geographic coordinate system of a virtual sphere.
FIG. 7 is a view illustrating an inclination of a third rotation axis of a hip joint of a humanoid robot according to one or more embodiments of the disclosure in a geographic coordinate system of a virtual sphere.
FIG. 8 is a view illustrating inclinations of three rotation axes of the opposite hip joint of a humanoid robot according to one or more embodiments of the disclosure in a geographic coordinate system of a virtual sphere.
FIG. 9 is a view illustrating hip joints of a humanoid robot according to a comparative embodiment.
FIG. 10 is a graph illustrating changes in pitch torque of an actuator of a hip joint when a humanoid robot according to a comparative embodiment performs a pitch motion.
FIG. 11 is a graph illustrating changes in pitch speed of an actuator of a hip joint when a humanoid robot according to a comparative embodiment performs a pitch motion.
FIG. 12 is a graph illustrating changes in roll torque of an actuator of a hip joint when a humanoid robot according to a comparative embodiment performs a roll motion.
FIG. 13 is a graph illustrating changes in roll speed of an actuator of a hip joint when a humanoid robot according to a comparative embodiment performs a roll motion.
FIG. 14 is a graph illustrating changes in pitch torque of an actuator of a hip joint when a humanoid robot according to one or more embodiments of the disclosure performs a pitch motion.
FIG. 15 is a graph illustrating changes in pitch speed of an actuator of a hip joint when a humanoid robot according to one or more embodiments of the disclosure performs a pitch motion.
FIG. 16 is a graph illustrating changes in roll torque of an actuator of a hip joint when a humanoid robot according to one or more embodiments of the disclosure performs a roll motion.
FIG. 17 is a graph illustrating changes in roll speed of an actuator of a hip joint when a humanoid robot according to one or more embodiments of the disclosure performs a roll motion.

### [Best Mode for Carrying out the Invention]

The various example embodiments described herein and terms used herein are not intended to limit the disclosure to specific embodiments, and the disclosure should be understood to include various modifications, equivalents, or alternatives of the example embodiments.

In connection with the description of the drawings, similar reference numbers may be used for similar or related components.

The singular form of a noun corresponding to an item may include one or more of the above item, unless the relevant context clearly indicates otherwise.

As used herein, each of phrases such as "A or B," "at least one of A and B," "at least one of A or B," "A, B, or C," "at least one of A, B, and C," "at least one of A, B, C" may include any one of the items listed together with the corresponding phrase, or any possible combination thereof.

The term "and/or" includes any element of a plurality of related described elements or a combination of a plurality of related described elements.

Terms such as "first," "second," "primary," or "secondary" may be used simply to distinguish one component from other components, and do not limit the corresponding components in other respects (e.g., importance or order).

When it is mentioned that one (e.g., first) component is "coupled" or "connected" to another (e.g., second) component with or without terms "functionally" or "communicatively," it means that the one component can be connected to the another component directly (e.g., wired), wirelessly, or through a third component.

Terms such as "include," "comprise," or "have" are intended to designate the presence of features, numbers, steps, operations, components, parts, or combinations thereof described in the embodiment, but do not preclude the presence or addition of one or more other features, numbers, steps, operations, components, parts, or combination thereof.

When a component is said to be "connected," "coupled," "supported," or "in contact" with another component, this means not only cases where the components are directly connected, coupled, supported, or contacted, but also cases where the components are indirectly connected, coupled, supported, or contacted through a third component.

When a component is said to be located "on" other component, this includes not only cases where the component is in contact with the other component, but also cases where another component exits between the two components.

Further, the terms "leading end," "rear end," "upper side," "lower side," "top end," "bottom end," etc., used in the disclosure are defined with reference to the drawings. However, the shape and position of each component are not limited by the terms.

Non-limiting example embodiments of disclosure relate to a hip joint of a humanoid robot capable of minimizing femoral interference and reducing torque and speed of three actuators included in the hip joint compared to the torque and speed of three actuators of a hip joint of a humanoid robot according to a comparative embodiment.

Hereinafter, a hip joint of a humanoid robot 1 according to one or more embodiments of the disclosure will be described in detail with reference to the attached drawings.

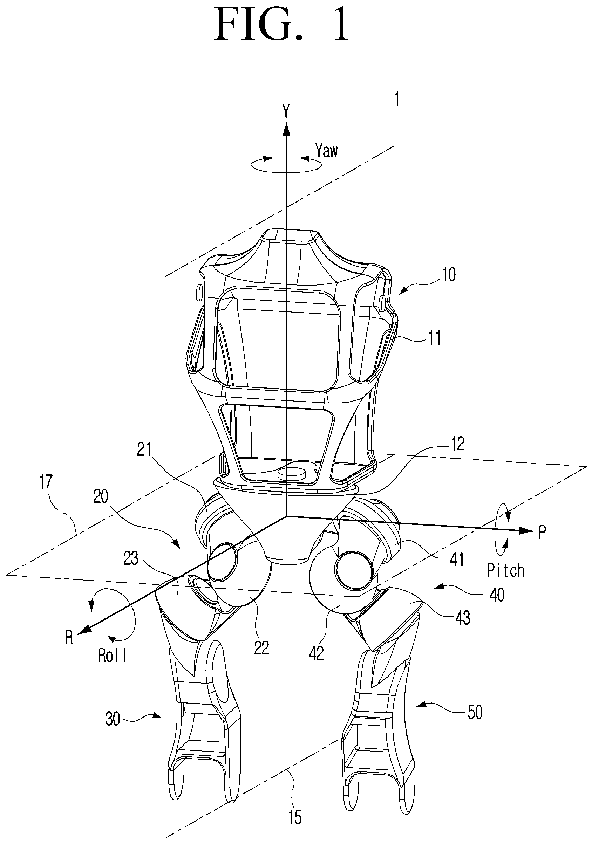

FIG. 1 is a view illustrating a humanoid robot 1 according to one or more embodiments of the disclosure.

Referring to FIG. 1, a humanoid robot 1 according to one or more embodiments of the disclosure may include a body 10, a left hip joint 20, a left leg 30, a right hip joint 40, and a right leg 50.

The body 10 may include a pair of arms and a pair of legs (e.g., the left leg 30 and the right leg 50). The pair of arms may be disposed on the left and right sides of the upper portion of the body 10. The pair of legs (e.g., the left leg 30 and the right leg 50) may be disposed on the left and right sides of the lower portion of the body 10.

The body 10 may include an upper body 11 and a lower body 12.

The upper body 11 may include the pair of arms. The pair of arms may include a left arm disposed on the left side of the upper body 11 and a right arm disposed on the right side of the upper body 11.

The lower body 12 may include a pair of hip joints (e.g., the left hip joint 20 and the right hip joint 40). The pair of hip joints (e.g., the left hip joint 20 and the right hip joint 40) may be located between the lower body 12 and the pair of legs (e.g., the left leg 30 and the right leg 50). The pair of hip joints may include the left hip joint 20 disposed on the left side of the body 10 and the right hip joint 40 disposed on the right side of the body 10.

The pair of legs may include the left leg 30 and the right leg 50. Each of the pair of legs (e.g., the left leg 30 and the right leg 50) may include a thigh, a calf, a knee joint, an ankle joint, and a foot.

The left leg 30 may be moved by the left hip joint 20. The right leg 50 may be moved by the right hip joint 40.

The left hip joint 20 may be disposed on the left side of the lower body 12. The left hip joint 20 may be located between the lower body 12 and the left leg 30.

The right hip joint 40 may be disposed on the right side of the lower body 12. The right hip joint 40 may be located between the lower body 12 and the right leg 50.

The left hip joint 20 and the right hip joint 40 may be disposed symmetrically with respect to a central vertical plane 15 that divides the body 10 into two halves (e.g., a left half and right half). The left hip joint 20 and the right hip joint 40 may be configured with the same structure as each other.

The humanoid robot 1 according to one or more embodiments of the disclosure may smoothly perform various movements similar to a human by using the body 10, the left hip joint 20, the left leg 30, the right hip joint 40, and the right leg 50.

The humanoid robot 1 according to one or more embodiments of the disclosure may perform a pitch motion, a roll motion, and a yaw motion by using the left hip joint 20, the left leg 30, the right hip joint 40, and the right leg 50.

Referring to FIG. 1, the pitch motion may refer to a clockwise or counterclockwise rotational motion of the humanoid robot 1 centered on a pitch axis P when the humanoid robot 1 is viewed from the side. The pitch axis P may refer to an axis perpendicular to the central vertical plane 15 that divides the body 10 of the humanoid robot 1 into left and right halves.

The roll motion may refer to a clockwise or counterclockwise rotational motion of the humanoid robot 1 centered on a roll axis R when the humanoid robot 1 is viewed from the front. The roll axis R may refer to an axis perpendicular to a vertical plane that divides the body 10 of the humanoid robot 1 into front and back halves. The roll axis R may intersect the pitch axis P at a right angle.

The yaw motion may refer to a clockwise or counterclockwise rotational motion of the humanoid robot 1 around a yaw axis Y when the humanoid robot 1 is viewed from above. The yaw axis Y may refer to an axis perpendicular to a horizontal plane 17 passing through the lower body 12 of the humanoid robot 1. The horizontal plane 17 may be perpendicular to the central vertical plane 15, and the pitch axis P and the roll axis R may be located on the horizontal plane 17. The roll axis R and the yaw axis Y may be located on the central vertical plane 15. Therefore, the yaw axis Y may be perpendicular to the pitch axis P and the roll axis R. The pitch axis P, the roll axis R, and the yaw axis Y may intersect at a point located on the horizontal plane 17 passing through the lower body 12 of the humanoid robot 1.

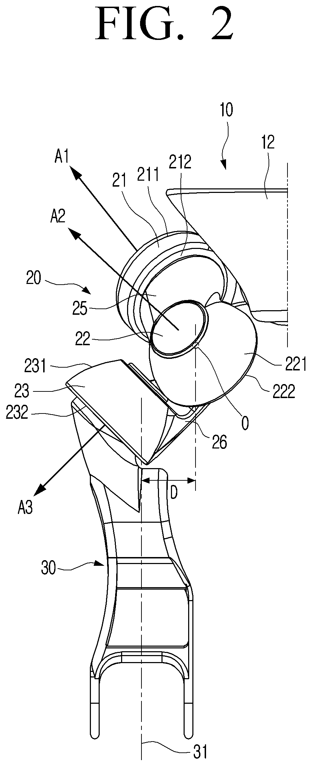

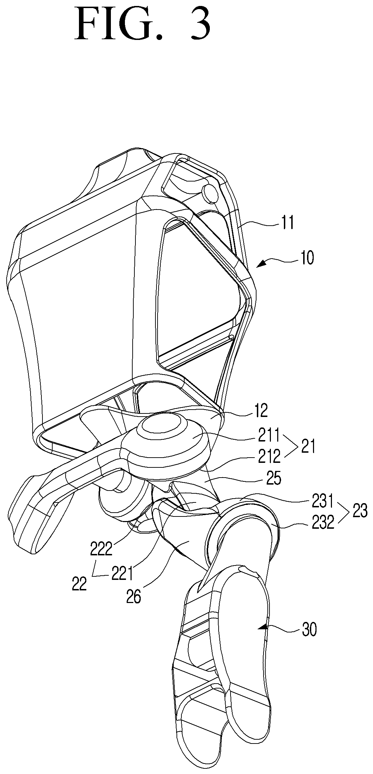

The left hip joint 20 and the right hip joint 40 may be configured with the same structure as each other. The left hip joint 20 and the right hip joint 40 may be configured symmetrically with respect to the central vertical plane 15 that divides the humanoid robot 1 into left and right halves. Therefore, the left hip joint 20 will be described in detail below with reference to FIGS. 2 and 3 as an example.

FIG. 2 is a view illustrating a hip joint (e.g., a left hip joint 20) of a humanoid robot 1 according to one or more embodiments of the disclosure. FIG. 3 is a rear perspective view illustrating a hip joint (e.g., a left hip joint 20) of a humanoid robot 1 according to one or more embodiments of the disclosure.

Below, the left hip joint 20 is described as an example of the hip joints (e.g., the left hip joint 20 and the right hip joint 40). That is, the right hip joint 40 may be the same as or similar to the left hip joint 20, and descriptions of the left hip joint 20 may also be applied to the right hip joint 40.

Referring to FIGS. 2 and 3, the left hip joint 20 according to one or more embodiments of the disclosure may include a first actuator 21, a second actuator 22, and a third actuator 23.

The first actuator 21 may be fixed to the body 10. The first actuator 21 may be disposed at the lower portion of the body 10, that is, the lower body 12. The first actuator 21 may include a first rotating part 212 configured to rotate around a first rotation axis A1. Here, the first rotation axis A1 may refer to a virtual straight line that is the rotation center of the first rotating part 212 of the first actuator 21.

For example, the first actuator 21 may include a first fixed part 211 and the first rotating part 212. The first fixed part 211 may be fixed to the body 10. The first rotating part 212 may be configured to rotate with respect to the first fixed part 211. The first rotating part 212 may rotate with respect to the first fixed part 211 around the first rotation axis A1. The first actuator 21 may be disposed such that the first rotation axis A1 is not parallel to the pitch axis P, the roll axis R, and the yaw axis Y.

The first actuator 21 may include various structures as long as it can rotate the first rotating part 212. For example, the first actuator 21 may include a motor and a reducer.

When the first actuator 21 includes the motor and the reducer, the first fixed part 211 may be configured as a first housing that is fixed to the body 10 and has the motor and the reducer disposed therein. The first rotating part 212 may be formed as a first rotating plate that is rotatably disposed in the first housing and is connected to the output portion of the reducer. The first rotating plate may be rotated with respect to the first housing by the motor and the reducer. The first rotating plate may be formed in an approximately circular shape and may be rotated around the first rotation axis A1. In other words, the first rotating part 212 may be rotated about the first rotation axis A1 with respect to the first fixed part 211.

The second actuator 22 may be connected to (e.g., disposed in) the first rotating part 212 of the first actuator 21. The second actuator 22 may include a second rotating part 222 configured to rotate around a second rotation axis A2. Here, the second rotation axis A2 may refer to a virtual straight line that is the rotation center of the second rotating part 222 of the second actuator 22.

The second actuator 22 may be disposed such that the second rotation axis A2 is inclined with respect to the first rotation axis A1.

For example, the second actuator 22 may include a second fixed part 221 and the second rotating part 222. The second fixed part 221 may be fixed to the first rotating part 212 of the first actuator 21. Therefore, the second actuator 22 may rotate integrally with the first rotating part 212 of the first actuator 21. In other words, when the first rotating part 212 of the first actuator 21 rotates, the second actuator 22 may rotate.

The second fixed part 221 may be fixed to the first rotating part 212 by a first support part 25. In other words, the first support part 25 may be disposed between the first rotating part 212 of the first actuator 21 and the second fixed part 221 of the second actuator 22.

When the first support part 25 is disposed between the first rotating part 212 and the second fixed part 221, an angle between the first rotation axis A1 of the first actuator 21 and the second rotation axis A2 of the second actuator 22 may be appropriately adjusted. The first support part 25 may be formed in various shapes as long as it can fix the second fixed part 221 to the first rotating part 212 and allow the first rotation axis A1 and the second rotation axis A2 to form a certain angle. In this embodiment, as illustrated in FIG. 2, the first support part 25 may be formed in a pillar shape extending downwardly from the first rotating part 212.

As another example, the second fixed part 221 of the second actuator 22 may be directly fixed to the first rotating part 212 of the first actuator 21 without the first support part 25.

The second rotating part 222 may be configured to be rotatable with respect to the second fixed part 221. The second rotating part 222 may rotate with respect to the second fixed part 221 about the second rotation axis A2. The second actuator 22 may be disposed so that the second rotation axis A2 is not parallel to the pitch axis P, the roll axis R, and the yaw axis Y. The second actuator 22 may be disposed so that the second rotation axis A2 is inclined with respect to the first rotation axis A1. In addition, the second actuator 22 may be disposed so that the second rotation axis A2 is not parallel to the first rotation axis A1. Therefore, the second rotation axis A2 may not be parallel to the first rotation axis A1 and may be inclined with respect to the first rotation axis A1.

The second actuator 22 may include various structures as long as it can rotate the second rotating part 222. For example, the second actuator 22 may include a motor and a reducer.

When the second actuator 22 includes the motor and the reducer, the second fixed part 221 may be configured as a second housing that is fixed to the first rotating part 212 and has the motor and the reducer disposed therein. The second rotating part 222 may be formed as a second rotating plate that is rotatably disposed in the second housing and is connected to the output portion of the reducer. The second rotating plate may be rotated with respect to the second housing by the motor and the reducer. The second rotating plate may be formed in an approximately circular shape and may be rotated around the second rotation axis A2. In other words, the second rotating part 222 may be rotated about the second rotation axis A2 with respect to the second fixed part 221.

The third actuator 23 may be connected to (e.g., disposed in) the second rotating part 222 of the second actuator 22. The third actuator 23 may include a third rotating part 232 configured to rotate around a third rotation axis A3. Here, the third rotation axis A3 may refer to a virtual straight line that is the rotation center of the third rotating part 232 of the third actuator 23.

The third actuator 23 may be disposed such that the third rotation axis A3 is inclined with respect to the second rotation axis A2. The third actuator 23 may be disposed such that the third rotation axis A3 is inclined with respect to the first rotation axis A1. In other words, the third rotation axis A3 may be inclined with respect to the first rotation axis A1 and the second rotation axis A2.

For example, the third actuator 23 may include a third fixed part 231 and the third rotating part 232. The third fixed part 231 may be fixed to the second rotating part 222 of the second actuator 22. Therefore, the third actuator 23 may rotate integrally with the second rotating part 222 of the second actuator 22. In other words, when the second rotating part 222 of the second actuator 22 rotates, the third actuator 23 may rotate.

The third fixed part 231 may be fixed to the second rotating part 222 by a second support part 26. In other words, the second support part 26 may be disposed between the second rotating part 222 of the second actuator 22 and the third fixed part 231 of the third actuator 23.

When the second support part 26 is disposed between the second rotating part 222 and the third fixed part 231, an angle between the second rotation axis A2 of the second actuator 22 and the third rotation axis A3 of the third actuator 23 may be appropriately adjusted. The second support part 26 may be formed in various shapes as long as it can fix the third fixed part 231 to the second rotating part 222 and allow the second rotation axis A2 and the third rotation axis A3 to form a certain angle. In this embodiment, as illustrated in FIG. 2, the second support part 26 may be formed in a plate shape that extends parallel to the second rotating part 222 from the second rotating part 222.

As another example, the third fixed part 231 of the third actuator 23 may be directly fixed to the second rotating part 222 of the second actuator 22 without the second support part 26.

The third rotating part 232 may be configured to be rotatable with respect to the third fixed part 231. The third rotating part 232 may rotate with respect to the third fixed part 231 about the third rotation axis A3. The third actuator 23 may be disposed so that the third rotation axis A3 is not parallel to the pitch axis P, the roll axis R, and the yaw axis Y. In addition, the third actuator 23 may be disposed so that the third rotation axis A3 is not parallel to the second rotation axis A2. The third actuator 23 may be disposed so that the third rotation axis A3 is not parallel to the first rotation axis A1. Therefore, the first rotation axis A1, the second rotation axis A2, and the third rotation axis A3 may be inclined with respect to each other.

The third actuator 23 may include various structures as long as it can rotate the third rotating part 232. For example, the third actuator 23 may include a motor and a reducer.

When the third actuator 23 includes the motor and the reducer, the third fixed part 231 may be configured as a third housing that is fixed to the second rotating part 222 and has the motor and the reducer disposed therein. The third rotating part 232 may be formed as a third rotating plate that is rotatably disposed in the third housing and is connected to the output portion of the reducer. The third rotating plate may be rotated with respect to the third housing by the motor and the reducer. The third rotating plate may be formed in an approximately circular shape and may be rotated around the third rotation axis A3. In other words, the third rotating part 232 may rotate about the third rotation axis A3 with respect to the third fixed part 231.

As another example, the first actuator 21, the second actuator 22, and the third actuator 23 may each include a motor without a reducer.

The left leg 30 may be connected to the third rotating part 232. For example, the left leg 30 may be connected to the third rotating part 232 of the third actuator 23 of the left hip joint 20.

Therefore, when the third rotating part 232 of the third actuator 23 rotates, the left leg 30 may move. In the case of the left hip joint 20 according to one or more embodiments of the disclosure, the first actuator 21, the second actuator 22, and the third actuator 23 may operate simultaneously to move the left leg 30.

The thigh of the left leg 30 may be disposed to be spaced apart from the body 10 by a certain distance. In detail, the left leg 30 may be disposed so that the center of the thigh of the left leg 30 is spaced apart from the left side of the lower body 12 by a certain distance.

The first rotation axis A1 of the first actuator 21, the second rotation axis A2 of the second actuator 22, and the third rotation axis A3 of the third actuator 23 may not be located on the same plane as each other. The first rotation axis A1, the second rotation axis A2, and the third rotation axis A3 may meet at an intersection point O. The intersection point O may be a sphere or a point having a certain size. For example, the first rotation axis A1, the second rotation axis A2, and the third rotation axis A3 may meet in a spherical space having a diameter of 50 mm or less.

The intersection point O of the first rotation axis A1, the second rotation axis A2, and the third rotation axis A3 may be located at the lower side of the lower body 12. The left leg 30 may appear to move around the intersection point O. Therefore, the intersection point O may be referred to as the center of the left hip joint 20.

The center 31 of the thigh of the left leg 30 may be spaced apart from the intersection point O by a certain distance D in the horizontal direction. For example, the center 31 of the thigh of the left leg 30 may be spaced apart from the intersection point O by approximately 50 mm to 120 mm. Here, the center 31 of the thigh of the left leg 30 may refer to a vertical plane that divides the thigh into left and right halves. A vertical plane including the center 31 of the thigh may be parallel to the central vertical plane 15 of the body 10.

When the center 31 of the thigh of the left leg 30 is disposed at a certain distance from the intersection point O as described above, the structure of the left hip joint 20 and the left leg 30 of the humanoid robot 1 according to one or more embodiments of the disclosure may be similar to the structure of a human hip joint and femur. Therefore, internal interference may not occur when the humanoid robot 1 performs a crossover step motion. The crossover step may be a motion for lateral balancing of the humanoid robot 1, and may prevent the humanoid robot 1 from falling over when force is applied in the left and right directions.

The right hip joint 40 may include a fourth actuator 41 (see FIG. 1), a fifth actuator 42 (see FIG. 1), and a sixth actuator 43 (see FIG. 1).

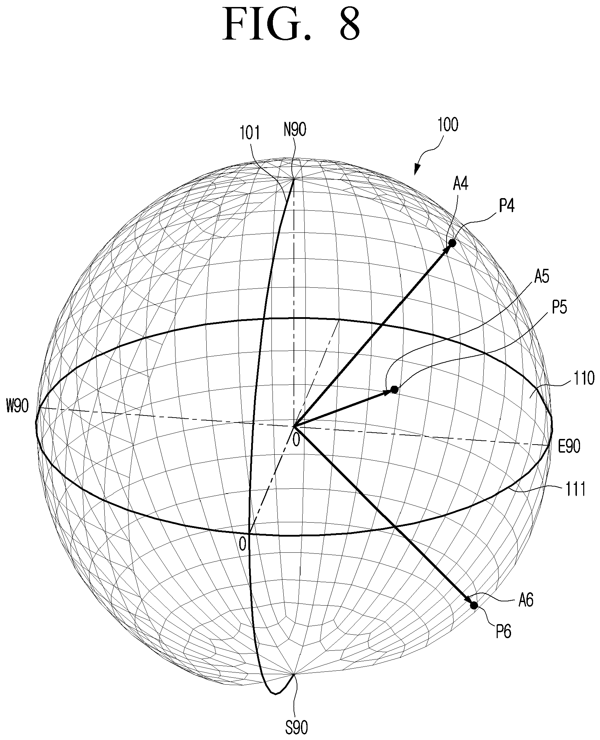

The fourth actuator 41 may be fixed to the right side of the lower body 12 and may include a fourth rotating part configured to rotate around a fourth rotation axis A4 (see FIG. 8). The fifth actuator 42 may be connected to (e.g., disposed in) the fourth rotating part and may include a fifth rotating part configured to rotate around a fifth rotation axis A5 (see FIG. 8) inclined with respect to the fourth rotation axis A4. The sixth actuator 43 may be connected to (e.g., disposed in) the fifth rotating part and may include a sixth rotating part configured to rotate around a sixth rotation axis A6 (see FIG. 8) inclined with respect to the fifth rotation axis A5.

The structures of the fourth actuator 41, the fifth actuator 42, and the sixth actuator 43 of the right hip joint 40 may be identical to the structures of the first actuator 21, the second actuator 22, and the third actuator 23 of the left hip joint 20 described above, so redundant descriptions thereof may be omitted.

The right leg 50 may be connected to the sixth actuator 43. For example, the right leg 50 may be connected to the sixth rotating part of the sixth actuator 43 of the right hip joint 40.

Therefore, when the sixth rotating part of the sixth actuator 43 rotates, the right leg 50 may be moved. In the case of the right hip joint 40 according to one or more embodiments of the disclosure, the fourth actuator 41, the fifth actuator 42, and the sixth actuator 43 may operate simultaneously to move the right leg 50.

The thigh of the right leg 50 may be disposed to be spaced apart from the body 10 by a certain distance. In detail, the right leg 50 may be disposed so that the center of the thigh of the right leg 50 is spaced apart from the right side of the lower body 12 by a certain distance.

The fourth rotation axis A4 of the fourth actuator 41, the fifth rotation axis A5 of the fifth actuator 42, and the sixth rotation axis A6 of the sixth actuator 43 may not be located on the same plane as each other. The fourth rotation axis A4, the fifth rotation axis A5, and the sixth rotation axis A6 may meet at an intersection point. The intersection point may be a sphere or a point having a certain size. For example, the fourth rotation axis A4, the fifth rotation axis A5, and the sixth rotation axis A6 may meet in a spherical space having a diameter of 50 mm or less.

The intersection point of the fourth rotation axis A4, the fifth rotation axis A5, and the sixth rotation axis A6 may be located at the lower side of the lower body 12. The right leg 50 may appear to move around the intersection point. Therefore, the intersection point may be referred to as the center of the right hip joint 40.

The center of the thigh of the right leg 50 may be spaced apart from the intersection point by a certain distance D in the horizontal direction. For example, the center of the thigh of the right leg 50 may be spaced apart from the intersection point by approximately 50 mm to 120 mm. Here, the center of the thigh of the right leg 50 may refer to a vertical plane that divides the thigh into left and right halves. The vertical plane of the thigh may be parallel to the central vertical plane 15 of the body 10.

When the center of the thigh of the right leg 50 is disposed at a certain distance from the intersection point as described above, the structure of the right hip joint 40 and the right leg 50 of the humanoid robot 1 according to one or more embodiments of the disclosure may be similar to the structure of the human hip joint and femur. Therefore, internal interference may not occur when the humanoid robot 1 performs a crossover step motion. The crossover step may be a motion for lateral balancing of the humanoid robot 1, and may prevent the humanoid robot 1 from falling over when force is applied in the left and right directions.

When the center of the thigh of each of the legs (e.g., the left leg 30 and the right leg 50) is spaced a certain distance from the lower body 12, interference between the thighs of the legs (e.g., the left leg 30 and the right leg 50) and the lower body 12 may be minimized. Therefore, when the humanoid robot 1 performs a roll motion, the driving range may be widened.

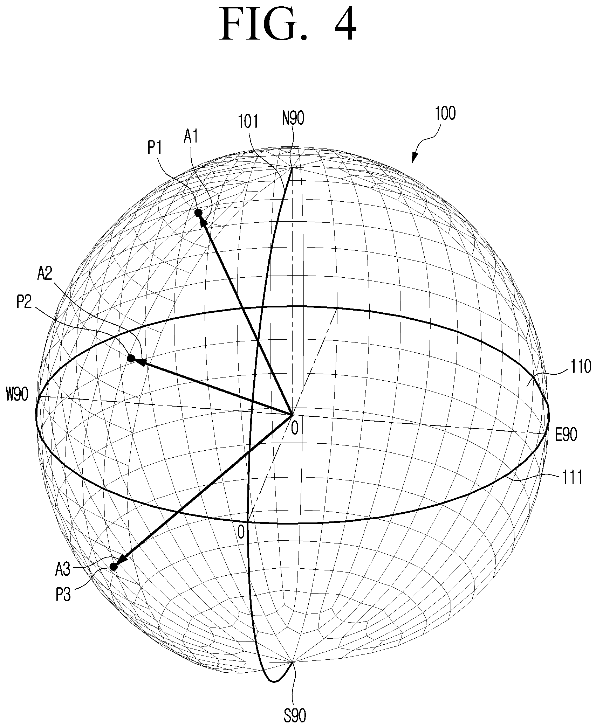

Hereinafter, the angles of the first rotation axis A1, the second rotation axis A2, and the third rotation axis A3 of the left hip joint 20 of the humanoid robot 1 according to one or more embodiments of the disclosure will be described in detail with reference to FIGS. 4 to 7.

FIG. 4 is a view illustrating a geographic coordinate system of a virtual sphere for explaining inclinations of three rotation axes (e.g., the first rotation axis A1, the second rotation axis A2, and the third rotation axis A3) of a hip joint (e.g., a left hip joint 20) of a humanoid robot 1 according to one or more embodiments of the disclosure.

The first rotation axis A1 of the first actuator 21, the second rotation axis A2 of the second actuator 22, and the third rotation axis A3 of the third actuator 23 may not be located on the same plane as each other. Therefore, in FIG. 4, the geographic coordinate system of a virtual sphere 100 is used to represent inclination angles of the first rotation axis A1, the second rotation axis A2, and the third rotation axis A3. In order to clearly represent the first rotation axis A1, the second rotation axis A2, and the third rotation axis A3, some of the lines for representing the virtual sphere 100 in FIG. 4 are omitted.

Referring to FIG. 4, the intersection point where the first rotation axis A1, the second rotation axis A2, and the third rotation axis A3 meet may be the center (e.g., the intersection point O) of the virtual sphere 100. The center (e.g., the intersection point O) may form a sphere with a very small diameter compared the diameter of the virtual sphere 100.

A prime meridian line 101 of the virtual sphere 100 may refer to a meridian that is parallel to the central vertical plane 15, that divides the humanoid robot 1 into left and right halves, and faces the front of the humanoid robot 1. In addition, an equatorial plane 110 of the virtual sphere 100 may be parallel to the horizontal plane 17 formed by the pitch axis P and the roll axis R of the humanoid robot 1, and the meridian may be perpendicular to the equatorial plane 110.

With reference to FIG. 4, the left direction of the virtual sphere 100 based on the prime meridian line 101 may be referred to as west longitude, and the right direction of the virtual sphere 100 may be referred to as east longitude. The prime meridian line 101 may be the standard for longitude and may be 0 degrees longitude. The upper direction of the virtual sphere 100 based on the equatorial plane 110 may be referred to as north latitude, and the lower direction of the virtual sphere 100 may be referred to as south latitude. An equator 111 representing the equatorial plane 110 may be the standard for latitude and may be 0 degrees latitude.

Also, in FIG. 4, W90 represents 90 degrees west longitude, and E90 represents 90 degrees east longitude. N90 represents 90 degrees north latitude, and S90 represents 90 degrees south latitude.

In the following description, the latitude and longitude of the rotation axis may refer to the latitude and longitude of a point where the surface of the virtual sphere 100 and the rotation axis meet. For example, the point where the surface of the virtual sphere 100 and the first rotation axis A1 meet may be referred to as the point of the first rotation axis A1, the point where the surface of the virtual sphere 100 and the second rotation axis A2 meet may be referred to as the point of the second rotation axis A2, and the point where the surface of the virtual sphere 100 and the third rotation axis A3 meet may be referred to as the point of the third rotation axis A3.

Referring to FIG. 4, the first rotation axis A1 (e.g., the point of the first rotation axis A) of the first actuator 21 may be located north of the equatorial plane 110 and left of the prime meridian line 101. The second rotation axis A2 (e.g., the point of the second rotation axis A2) of the second actuator 22 may be located north of the equatorial plane 110 and left of the prime meridian line 101. In terms of longitude, the second rotation axis A2 (e.g., the point of the second rotation axis A2) may be located closer to the prime meridian line 101 than the first rotation axis A1 (e.g., the point of the first rotation axis A). The third rotation axis A3 (e.g., the point of the third rotation axis A3) of the third actuator 23 may be located south of the equatorial plane 110 and left of the prime meridian line 101. In terms of longitude, the third rotation axis A3 (e.g., the point of the third rotation axis A3) may be located between the first rotation axis A1 (e.g., the point of the first rotation axis A) and the second rotation axis A2 (e.g., the point of the second rotation axis A2).

In other words, the first rotation axis A1 (e.g., the point of the first rotation axis A1), the second rotation axis A2 (e.g., the point of the second rotation axis A2), and the third rotation axis A3 (e.g., the point of the third rotation axis A3) of the left hip joint 20 may be located on the left side with respect to the prime meridian line 101. In addition, the first rotation axis A1 (e.g., the point of the first rotation axis A1) and the second rotation axis A2 (e.g., the point of the second rotation axis A2) of the left hip joint 20 may be located above the equatorial plane 110, and the third rotation axis A3 (e.g., the point of the third rotation axis A3) of the left hip joint 20 may be located below the equatorial plane 110.

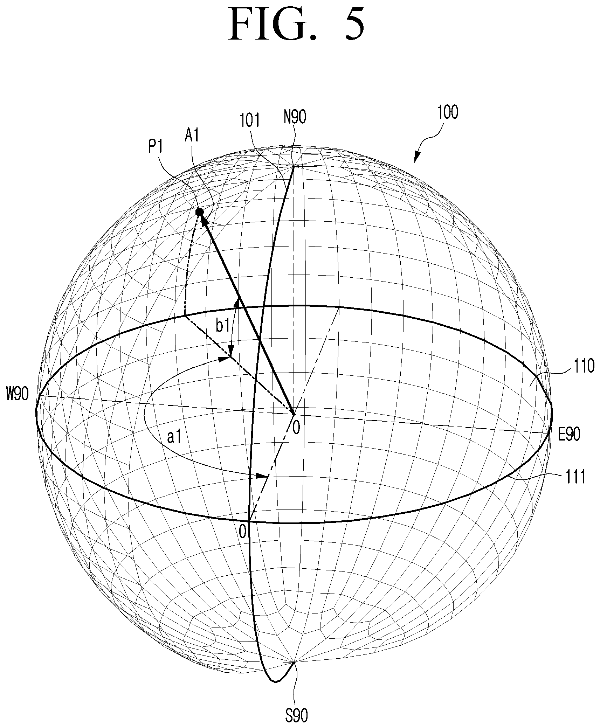

Hereinafter, the inclination angles of each of the first rotation axis A1, the second rotation axis A2, and the third rotation axis A3 will be described in detail with reference to FIGS. 5 to 7.

FIG. 5 is a view illustrating an inclination of a first rotation axis A1 of a hip joint (e.g., a left hip joint 20) of a humanoid robot 1 according to one or more embodiments of the disclosure in a geographic coordinate system of a virtual sphere. For reference, FIG. 5 shows the inclination angles of the first rotation axis A1 of the first actuator 21 using a geographic coordinate system of the virtual sphere 100 identical to FIG. 4.

Referring to FIG. 5, the first rotation axis A1 of the first actuator 21 may meet the surface of the virtual sphere 100 at a point P1. The longitude a1 of the first rotation axis A1 may be 145±15 degrees west longitude with respect to the prime meridian line 101. When the longitude a1 of the first rotation axis A1 is within this angular range, the effect of reducing the required torque and speed of the first actuator 21 may be maximized. In addition, the latitude b1 of the first rotation axis A1 may be 30±15 degrees north latitude with respect to the equator 111. When the latitude b1 of the first rotation axis A1 is less than 15 degrees north latitude, interference may occur in the left hip joint 20. When the latitude b1 of the first rotation axis A1 exceeds 45 degrees north latitude, the effect of reducing the required torque and speed of the first actuator 21 may be decreased.

In other words, when the first actuator 21 is disposed so that the first rotation axis A1 thereof is 145±15 degrees west longitude and 30±15 degrees north latitude, the required torque and speed of the first actuator 21 according to one or more embodiments of the disclosure may be reduced compared to the required torque and speed of a first actuator used in a hip joint according to a comparative embodiment. Accordingly, the required specifications of the first actuator 21 according to one or more embodiments of the disclosure may be lower than the required specifications of the first actuator according to a comparative embodiment.

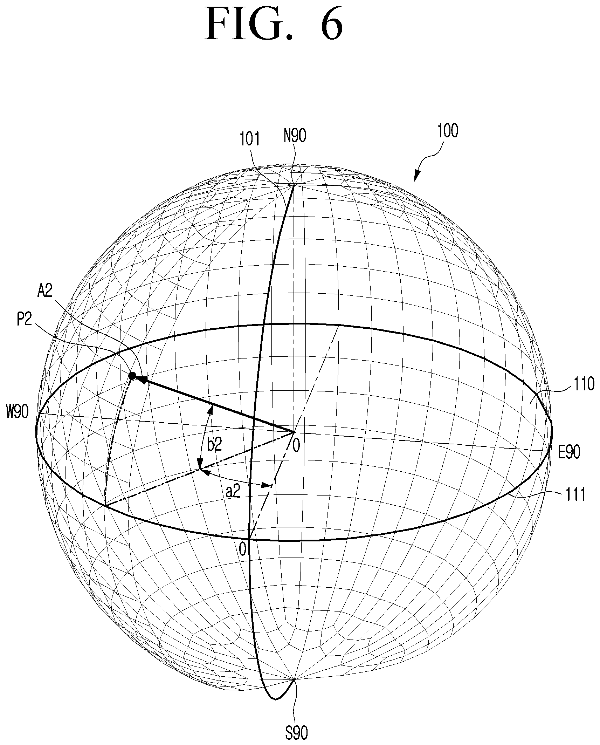

FIG. 6 is a view illustrating an inclination of a second rotation axis A2 of a hip joint of a humanoid robot 1 according to one or more embodiments of the disclosure in a geographic coordinate system of a virtual sphere. For reference, FIG. 6 shows the inclination angles of the second rotation axis A2 of the second actuator 22 using a geographic coordinate system of the virtual sphere 100 identical to FIG. 4.

Referring to FIG. 6, the second rotation axis A2 of the second actuator 22 may meet the surface of the virtual sphere 100 at a point P2. The longitude a2 of the second rotation axis A2 may be 37±15 degrees west longitude with respect to the prime meridian line 101. When the longitude a2 of the second rotation axis A2 is within this angular range, the effect of reducing the torque and speed of the second actuator 22 may be maximized. In addition, the latitude b2 of the second rotation axis A2 may be 31±15 degrees north latitude with respect to the equator 111. When the latitude b2 of the second rotation axis A2 is within this angular range, the effect of reducing the torque and speed of the second actuator 22 may be maximized.

In other words, when the second actuator 22 is disposed so that the second rotation axis A2 thereof is 37±15 degrees west longitude and 31±15 degrees north latitude, the required torque and speed of the second actuator 22 according to one or more embodiments of the disclosure may be reduced compared to the required torque and speed of a second actuator used in a hip joint according to a comparative embodiment. Accordingly, the required specifications of the second actuator 22 according to one or more embodiments of the disclosure may be lower than the required specifications of the second actuator according to a comparative embodiment.

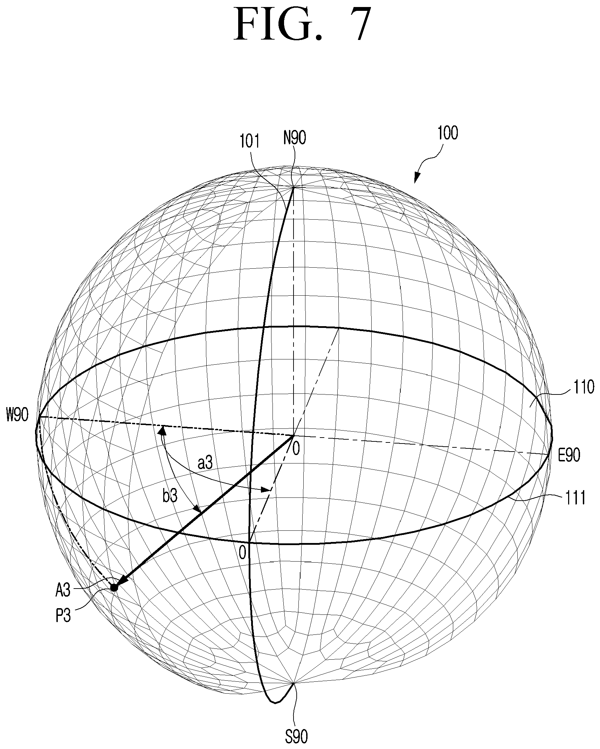

FIG. 7 is a view illustrating an inclination of a third rotation axis A3 of a hip joint (e.g., a left hip joint 20) of a humanoid robot 1 according to one or more embodiments of the disclosure in a geographic coordinate system of a virtual sphere. For reference, FIG. 7 shows the inclination angles of the third rotation axis A3 of the third actuator 23 using a geographic coordinate system of the virtual sphere 100 identical to FIG. 4.

Referring to FIG. 7, the third rotation axis A3 of the third actuator 23 may meet the surface of the virtual sphere 100 at a point P3. The longitude a3 of the third rotation axis A3 may be 90±25 degrees west longitude based on the prime meridian line 101. When the longitude a3 of the third rotation axis A3 is less than 75 degrees west longitude, a singularity may occur when the left hip joint 20 operates. When the longitude a3 of the third rotation axis A3 exceeds 115 degrees west longitude, the effect of reducing the required torque and speed of the third actuator 23 may be decreased. In addition, the latitude b3 of the third rotation axis A3 may be 45±15 degrees south latitude with respect to the equator 111. When the latitude b3 of the third rotation axis A3 is less than 30 degrees south latitude, the effect of reducing the required torque and speed of the third actuator 23 may be decreased. When the latitude b3 of the third rotation axis A3 exceeds 60 degrees south latitude, the effect of reducing the required torque and speed of the third actuator 23 may be reduced.

In other words, when the third actuator 23 is disposed so that the third rotation axis A3 thereof is 90±25 degrees west longitude and 45±15 degrees south latitude, the required torque and speed of the third actuator 23 according to one or more embodiments of the disclosure may be reduced compared to the required torque and speed of a third actuator used in the hip joint according to a comparative embodiment. Accordingly, the required specifications of the third actuator 23 according to one or more embodiments of the disclosure may be lower than the required specifications of the third actuator according to a comparative embodiment.

With reference to FIGS. 4 to 7, the left hip joint 20 of the humanoid robot 1 according to one or more embodiments of the disclosure has been described above. The right hip joint 40 of the humanoid robot 1 according to one or more embodiments of the disclosure may be configured with the same structure as the left hip joint 20 and may be symmetrical with respect to the central vertical plane 15 of the humanoid robot 1.

Hereinafter, the inclination angles of the fourth rotation axis A4, the fifth rotation axis A5, and the sixth rotation axis A6 of the right hip joint 40 will be described with reference to FIG. 8.

FIG. 8 is a view illustrating inclinations of three rotation axes (e.g., thee fourth rotation axis A4, the fifth rotation axis A5, and the sixth rotation axis A6 of the opposite hip joint (e.g., the right hip joint 40) of a humanoid robot 1 according to one or more embodiments of the disclosure in a geographic coordinate system of a virtual sphere 100. For reference, FIG. 8 shows the inclination angles of the fourth rotation axis A4, the fifth rotation axis A5, and the sixth rotation axis A6 of the right hip joint 40 using a geographic coordinate system of the same virtual sphere 100 as that of FIG. 4.

The right hip joint 40 may include three actuators, that is, the fourth actuator 41, the fifth actuator 42, and the sixth actuator 43. The fourth actuator 41, the fifth actuator 42, and the sixth actuator 43 of the right hip joint 40 may be configured in the same manner as the first actuator 21, the second actuator 22, and the third actuator 23 of the left hip joint 20 described above.

Accordingly, the fourth rotation axis A4, the fifth rotation axis A5, and the sixth rotation axis A6 of the right hip joint 40 may meet at an intersection point O (e.g., a right intersection point). A fourth rotating part of the fourth actuator 41 may rotate around the fourth rotation axis A4. A fifth rotating part of the fifth actuator 42 may rotate around the fifth rotation axis A5. A sixth rotating part of the sixth actuator 43 may rotate around the sixth rotation axis A6.

Referring to FIG. 8, the fourth rotation axis A4 (e.g., a point P4 of the fourth rotation axis A4) of the fourth actuator 41 may be located north of the equatorial plane 110 and right of the prime meridian line 101. The fifth rotation axis A5 (e.g., a point P5 of the fifth rotation axis A5) of the fifth actuator 42 may be located north of the equatorial plane 110 and right of the prime meridian line 101. In terms of longitude, the fifth rotation axis A5 (e.g., the point P5) may be located closer than the fourth rotation axis A4 (e.g., the point P4) to the prime meridian line 101. The sixth rotation axis A6 (e.g., a point p6 of the sixth rotation axis A6) of the sixth actuator 43 may be located south of the equatorial plane 110 and right of the prime meridian line 101. In terms of longitude, the sixth rotation axis A6 (e.g., the point p6) may be located between the fourth rotation axis A4 (e.g., the point p4) and the fifth rotation axis A5 (e.g., the point p5).

In other words, the fourth rotation axis A4 (e.g., the point p4), the fifth rotation axis A5 (e.g., the point p5), and the sixth rotation axis A6 (e.g., the point p6) of the right hip joint 40 may be located on the right side of the prime meridian line 101. In addition, the fourth rotation axis A4 (e.g., the point p4) and the fifth rotation axis A5 (e.g., the point p5) of the right hip joint 40 may be located above the equatorial plane 110, and the sixth rotation axis A6 (e.g., the point p6) thereof may be located below the equatorial plane 110.

In detail, the point P4 where the fourth rotation axis A4 of the fourth actuator 41 and the surface of the virtual sphere 100 meet may be 145±15 degrees east longitude and 30±15 degrees north latitude. The point P5 where the fifth rotation axis A5 of the fifth actuator 42 and the surface of the virtual sphere 100 meet may be 37±15 degrees east longitude and 30±15 degrees north latitude. The point P6 where the sixth rotation axis A6 of the sixth actuator 43 and the surface of the virtual sphere 100 meet may be 90±25 degrees east longitude and 45±15 degrees south latitude.

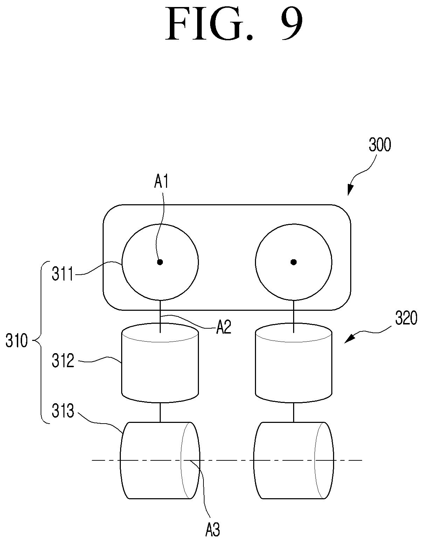

Hereinafter, the effect of the hip joint of the humanoid robot 1 according to one or more embodiments of the disclosure will be described in detail with reference to FIGS. 9 to 17.

FIG. 9 is a view illustrating a hip joint 300 of a humanoid robot according to a comparative embodiment.

Referring to FIG. 9, the hip joint 300 of the humanoid robot according to a comparative embodiment includes a left hip joint 310 and a right hip joint 320.

The left hip joint 310 includes a first actuator 311, a second actuator 312, and a third actuator 313. The first actuator 311 is a roll actuator that allows the humanoid robot to perform a roll motion. The second actuator 312 is a yaw actuator that allows the humanoid robot to perform a yaw motion. The third actuator 313 is a pitch actuator that allows the humanoid robot to perform a pitch motion. The first actuator 311, the second actuator 312, and the third actuator 313 are connected in series. In other words, the second actuator 312 is connected to the rotating part of the first actuator 311, the third actuator 313 is connected to the rotating part of the second actuator 312, and the leg is connected to the rotating part of the third actuator 313.

At least two from among the first rotation axis A1, the second rotation axis A2, and the third rotation axis A3 may be positioned on the same plane as each other. The first rotation axis A1, the second rotation axis A2, and the third rotation axis A3 may be arranged perpendicular to each other. For example, the first rotation axis A1 may be arranged perpendicular to the second rotation axis A2, the second rotation axis A2 may be arranged perpendicular to the third rotation axis A3, and the third rotation axis A3 may be arranged perpendicular to the first rotation axis A1.

The right hip joint 320 is configured with the same structure as the left hip joint 310, so a redundant description thereof is omitted.

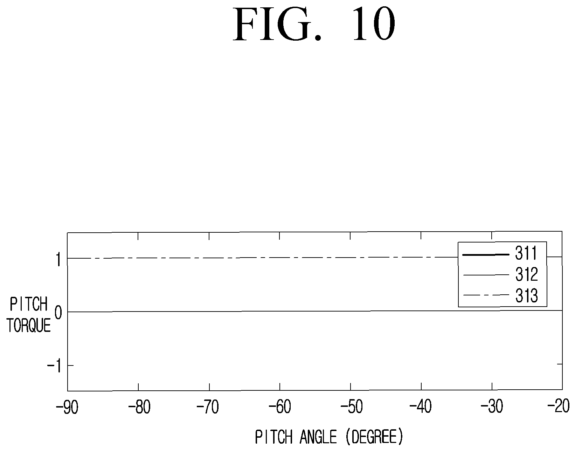

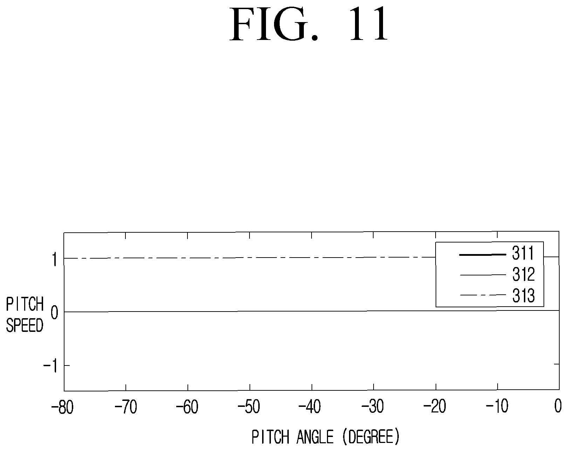

FIGS. 10 and 11 are graphs illustrating changes in pitch torque and pitch speed of actuators of a hip joint when a humanoid robot according to the comparative embodiment performs a pitch motion. For reference, in FIG. 10, the horizontal axis represents the pitch angle of the hip joint, and the vertical axis represents the pitch torque of the actuator. In FIG. 11, the horizontal axis represents the pitch angle of the hip joint, and the vertical axis represents the pitch speed of the actuator.

Referring to FIG. 10, when the humanoid robot according to the comparative embodiment performs a pitch motion, only the pitch actuator, that is, the third actuator 313 operates. The roll actuator and the yaw actuator, that is, the first actuator 311 and the second actuator 312 do not operate. Therefore, the third actuator 313 generates the torque required for the pitch motion of the humanoid robot. In FIG. 10, the maximum torque required for the third actuator 313 is indicated as 1.

Referring to FIG. 11, when the humanoid robot according to the comparative embodiment performs a pitch motion, only the pitch actuator, that is, the third actuator 313 operates. The roll actuator and the yaw actuator, that is, the first actuator 311 and the second actuator 312 do not operate. Therefore, the third actuator 313 generates a speed corresponding to the speed required for the pitch motion of the humanoid robot. In FIG. 11, the maximum speed required for the third actuator 313 is indicated as 1.

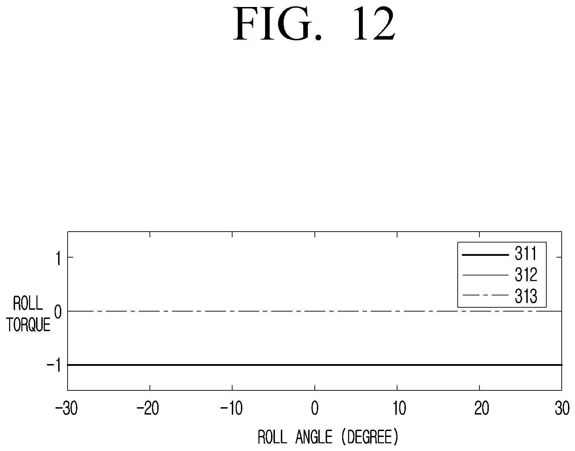

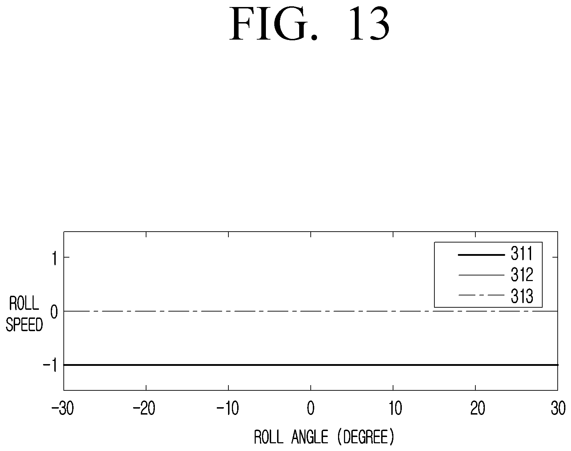

FIGS. 12 and 13 are graphs illustrating changes in roll torque and roll speed of actuators of a hip joint when a humanoid robot according to the comparative embodiment performs a roll motion. For reference, in FIG. 12, the horizontal axis represents the roll angle of the hip joint, and the vertical axis represents the roll torque of the actuator. In FIG. 13, the horizontal axis represents the roll angle of the hip joint, and the vertical axis represents the roll speed of the actuator.

Referring to FIG. 12, when the humanoid robot according to the comparative embodiment performs a roll motion, only the roll actuator, that is, the first actuator 311 operates. The yaw actuator and the pitch actuator, that is, the second actuator 312 and the third actuator 313 do not operate. Therefore, the first actuator 311 generates the torque required for the roll motion of the humanoid robot. In FIG. 12, the maximum torque required for the first actuator 311 is indicated as -1.

Referring to FIG. 13, when the humanoid robot according to the comparative embodiment performs a roll motion, only the roll actuator, that is, the first actuator 311 operates. The yaw actuator and the pitch actuator, that is, the second actuator 312 and the third actuator 313 do not operate. Therefore, the first actuator 311 generates a speed corresponding to the speed required for the roll motion of the humanoid robot. In FIG. 13, the maximum speed required for the first actuator 311 is indicated as -1.

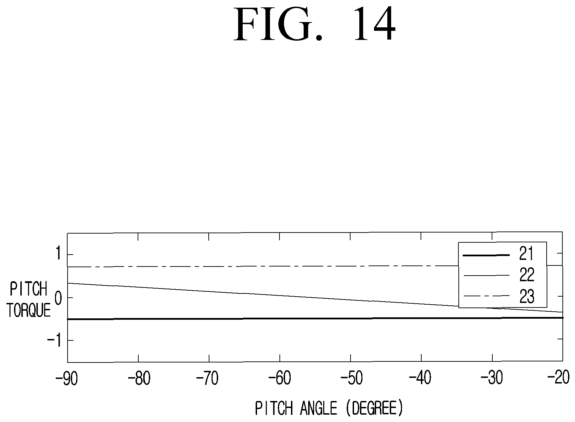

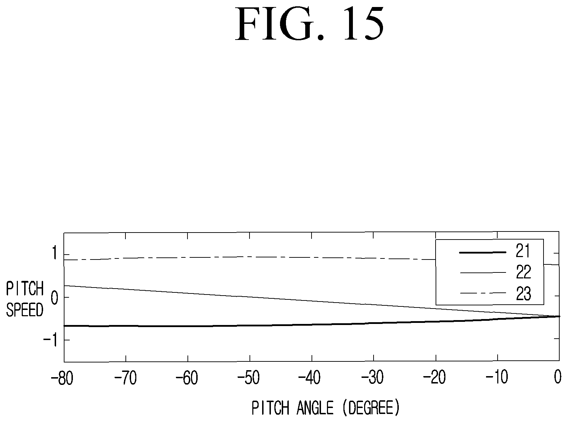

FIGS. 14 and 15 are graphs illustrating changes in pitch torque and pitch speed of actuators of a hip joint when a humanoid robot 1 according to one or more embodiments of the disclosure performs a pitch motion. For reference, in FIG. 14, the horizontal axis represents the pitch angle of the hip joint, and the vertical axis represents the pitch torque of the actuator. In FIG. 15, the horizontal axis represents the pitch angle of the hip joint, and the vertical axis represents the pitch speed of the actuator.

Referring to FIG. 14, when the humanoid robot 1 according to one or more embodiments of the disclosure performs a pitch motion, the first actuator 21, the second actuator 22, and the third actuator 23 all operate. Therefore, the first actuator 21, the second actuator 22, and the third actuator 23 all generate the pitch torque required for the pitch motion of the humanoid robot 1. In other words, the first actuator 21, the second actuator 22, and the third actuator 23 all share the pitch torque required for the pitch motion of the humanoid robot 1.

In FIG. 14, when performing the pitch motion, the third actuator 23 may be responsible for the maximum portion of the pitch torque required for the pitch motion. At this time, the maximum torque of the third actuator 23 may be 0.71. The pitch torque shared by each of the first actuator 21 and the second actuator 22 may be smaller than the pitch torque shared by the third actuator 23. Therefore, the maximum required pitch torque of the actuator for the humanoid robot 1 according to one or more embodiments of the disclosure to perform the pitch motion, that is, the maximum required pitch torque of the third actuator 23, may be reduced by 29% compared to the maximum required torque of the pitch actuator, that is, the third actuator 313, for the humanoid robot according to the comparative embodiment to perform the pitch motion.

Referring to FIG. 15, when the humanoid robot 1 according to one or more embodiments of the disclosure performs the pitch motion, the first actuator 21, the second actuator 22, and the third actuator 23 all operate. Therefore, the first actuator 21, the second actuator 22, and the third actuator 23 all generate the pitch speed required for the pitch motion of the humanoid robot 1. In other words, the first actuator 21, the second actuator 22, and the third actuator 23 all share the pitch speed required for the pitch motion of the humanoid robot 1.

In FIG. 15, when performing the pitch motion, the third actuator 23 may be responsible for the maximum portion of the pitch speed required for the pitch motion. At this time, the maximum pitch speed of the third actuator 23 may be 0.89. The pitch speed shared by each of the first actuator 21 and the second actuator 22 may be smaller than the pitch speed shared by the third actuator 23. Therefore, the maximum required pitch speed of the actuator for the humanoid robot 1 according to one or more embodiments of the disclosure to perform the pitch motion, that is, the maximum required pitch speed of the third actuator 23, may be reduced by 11% compared to the maximum required speed of the pitch actuator, that is, the third actuator 313, for the humanoid robot according to the comparative embodiment to perform the pitch motion.

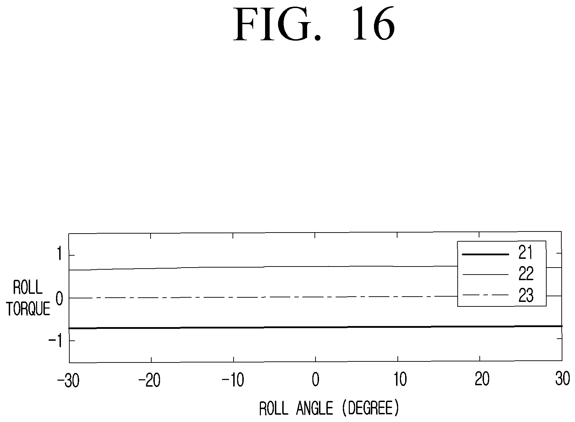

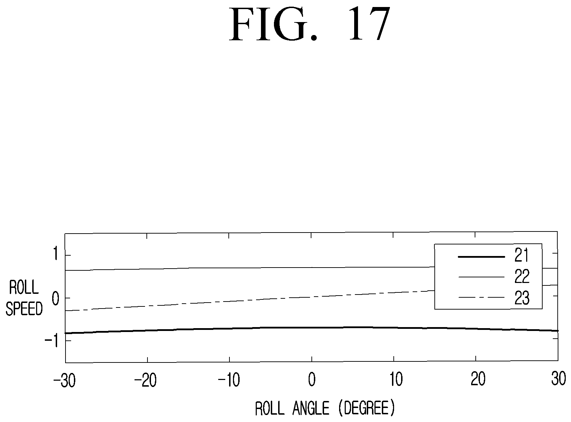

FIGS. 16 and 17 are graphs illustrating changes in roll torque and roll speed of an actuator of a hip joint when a humanoid robot 1 according to one or more embodiments of the disclosure performs a roll motion. For reference, in FIG. 16, the horizontal axis represents the roll angle of the hip joint, and the vertical axis represents the roll torque of the actuator. In FIG. 17, the horizontal axis represents the roll angle of the hip joint, and the vertical axis represents the roll speed of the actuator.

Referring to FIG. 16, when the humanoid robot 1 according to one or more embodiments of the disclosure performs a roll motion, the first actuator 21, the second actuator 22, and the third actuator 23 all operate. Therefore, the first actuator 21, the second actuator 22, and the third actuator 23 all generate a roll torque required for the roll motion of the humanoid robot 1. In other words, the first actuator 21, the second actuator 22, and the third actuator 23 all share the roll torque required for the roll motion of the humanoid robot 1.

In FIG. 16, when performing the roll motion, the first actuator 21 may be responsible for the maximum portion of the roll torque required for the roll motion. At this time, the maximum roll torque of the first actuator 21 may be 0.71. The roll torque shared by each of the second actuator 22 and the third actuator 23 may be smaller than the roll torque shared by the first actuator 21. Therefore, the maximum required roll torque of the actuator for the humanoid robot 1 according to one or more embodiments of the disclosure to perform the roll motion, that is, the maximum required roll torque of the first actuator 21, may be reduced by 29% compared to the maximum required torque of the roll actuator, that is, the first actuator 311, for the humanoid robot according to the comparative embodiment to perform the roll motion.

Referring to FIG. 17, when the humanoid robot 1 according to one or more embodiments of the disclosure performs a roll motion, the first actuator 21, the second actuator 22, and the third actuator 23 all operate. Therefore, the first actuator 21, the second actuator 22, and the third actuator 23 all generate a roll speed required for the roll motion of the humanoid robot 1. In other words, the first actuator 21, the second actuator 22, and the third actuator 23 all share the roll speed required for the roll motion of the humanoid robot 1.

In FIG. 17, when performing the roll motion, the first actuator 21 may be responsible for the maximum portion of the roll speed required for the roll motion. At this time, the maximum roll speed of the first actuator 21 may be 0.81. The roll speed shared by each of the second actuator 22 and the third actuator 23 may be smaller than the roll speed shared by the first actuator 21. Therefore, the maximum required roll speed of the actuator for the humanoid robot 1 according to one or more embodiments of the disclosure to perform the roll motion, that is, the maximum roll speed of the first actuator 21, may be reduced by 19% compared to the maximum required speed of the roll actuator, that is, the first actuator 311, for the humanoid robot according to the comparative embodiment to perform the roll motion.

In the hip joint of the humanoid robot according to one or more embodiments of the disclosure having the structure as described above, when the humanoid robot performs a pitch motion, a roll motion, and a yaw motion, the first actuator, the second actuator, and the third actuator included in the hip joint all operate to generate the required torque and speed. Therefore, when performing the pitch motion, the roll motion, and the yaw motion, the required specifications of the actuators may be lowered compared to the humanoid robot according to a comparative embodiment in which the pitch actuator, the roll actuator, and the yaw actuator operate individually.

In addition, because the hip joint of the humanoid robot according to one or more embodiments of the disclosure is configured similarly to the hip joint of a human, the sense of foreignness may be reduced.

In addition, the humanoid robot according to one or more embodiments of the disclosure has its legs spaced a certain distance from one side of the lower portion of the body. Therefore, when the humanoid robot performs the roll motion, the range of motion may be widened.

In the foregoing, non-limiting example embodiments of the disclosure have been described with reference to the accompanying drawings. However, it is understood by those skilled in the art that various changes may be made in form and detail without departing from the spirit and scope of the disclosure.

## Claims

1. A hip joint of a humanoid robot, the hip joint comprising:
a first actuator comprising a first rotating part configured to rotate around a first rotation axis;
a second actuator connected to the first rotating part, the second actuator comprising a second rotating part configured to rotate around a second rotation axis inclined with respect to the first rotation axis; and
a third actuator connected to the second rotating part, the third actuator comprising a third rotating part configured to rotate around a third rotation axis inclined with respect to the second rotation axis.

2. The hip joint of the humanoid robot of claim 1, wherein the first rotation axis, the second rotation axis, and the third rotation axis meet at an intersection point.

3. The hip joint of the humanoid robot of claim 2, wherein, in a geographic coordinate system of a virtual sphere that is centered on the intersection point:
a first point on the first rotation axis is 145±15 degrees west longitude with respect to a prime meridian line of the virtual sphere, and 30±15 degrees north latitude with respect to an equator of the virtual sphere;
a second point on the second rotation axis is 37±15 degrees west longitude with respect to the prime meridian line, and 31±15 degrees north latitude with respect to the equator; and
a third point the third rotation axis is 90±25 degrees west longitude with respect to the prime meridian line, and 45±15 degrees south latitude with respect to the equator, and
wherein the first point, the second point, and the third point are on a surface of the virtual sphere.

4. The hip joint of the humanoid robot of claim 2, wherein the third rotating part corresponds to a thigh of a leg of the humanoid robot, and
a center of the thigh is horizontally spaced a distance from the intersection point.

5. The hip joint of the humanoid robot of claim 4, wherein the distance is 50 mm to 120 mm.

6. A humanoid robot comprising:
a body;
a left leg;
a left hip joint on a left side of the body, the left hip joint configured to move the left leg;
a right leg; and
a right hip joint on a right side of the body, the right hip joint configured to move the right leg,
wherein the left hip joint comprises:
a first actuator comprises a first rotating part configured to rotate around a first rotation axis;
a second actuator connected to the first rotating part, the second actuator comprising a second rotating part configured to rotate around a second rotation axis inclined with respect to the first rotation axis; and
a third actuator connected to the second rotating part, the third actuator comprising a third rotating part configured to rotate around a third rotation axis inclined with respect to the second rotation axis, and
wherein the right hip joint comprises:
a fourth actuator comprising a fourth rotating part configured to rotate around a fourth rotation axis;
a fifth actuator connected to the fourth rotating part, the fifth actuator comprising a fifth rotating part configured to rotate around a fifth rotation axis inclined with respect to the fourth rotation axis; and
a sixth actuator connected to the fifth rotating part, the sixth actuator comprising a sixth rotating part configured to rotate around a sixth rotation axis inclined with respect to the fifth rotation axis.

7. The humanoid robot of claim 6, wherein the first rotation axis, the second rotation axis, and the third rotation axis of the left hip joint meet at an intersection point.

8. The humanoid robot of claim 7, wherein, in a geographic coordinate system of a virtual sphere that is centered on the intersection point:
a first point of the first rotation axis of the left hip joint is 145±15 degrees west longitude with respect to a prime meridian line of the virtual sphere, and 30±15 degrees north latitude with respect to an equator of the virtual sphere;
a second point of the second rotation axis of the left hip joint is 37±15 degrees west longitude with respect to the prime meridian line, and 31±15 degrees north latitude with respect to the equator; and
a third point of the third rotation axis of the left hip joint is 90±25 degrees west longitude with respect to the prime meridian line, and 45±15 degrees south latitude with respect to the equator, and
wherein the first point, the second point, and the third point are on a surface of the virtual sphere.

9. The humanoid robot of claim 6, wherein the fourth rotation axis, the fifth rotation axis, and the sixth rotation axis of the right hip joint meet at an intersection point.

10. The humanoid robot of claim 9, wherein, in a geographic coordinate system of a virtual sphere that is centered on the intersection point:
a fourth point of the fourth rotation axis of the right hip joint is 145±15 degrees east longitude with respect to a prime meridian line of the virtual sphere, and 30±15 degrees north latitude with respect to an equator of the virtual sphere;
a fifth point of the fifth rotation axis of the right hip joint is 37±15 degrees east longitude with respect to the prime meridian line, and 31±15 degrees north latitude with respect to the equator; and
a sixth point of the sixth rotation axis of the right hip joint is 90±25 degrees east longitude with respect to the prime meridian line, and 45±15 degrees south latitude with respect to the equator, and
wherein the fourth point, the fifth point, and the sixth point are on a surface of the virtual sphere.

11. The humanoid robot of claim 7, wherein the third rotating part corresponds to a thigh of a leg of the humanoid robot, and
a center of the thigh is horizontally spaced a distance from the intersection point.

12. The humanoid robot of claim 11, wherein the distance is 50 mm to 120 mm.

13. The humanoid robot of claim 9, wherein the sixth rotating part corresponds to a thigh of the right leg of the humanoid robot, and
a center of the thigh is spaced a distance horizontally from the intersection point.

14. The humanoid robot of claim 13, wherein the distance is 50 mm to 120 mm.
